# EUROPÄISCHE PATENTANMELDUNG

(11) **EP 1 184 598 A1**
(43) Veröffentlichungstag der Anmeldung: **06.03.2002**
(21) Anmeldenummer: 01106407.8
(22) Anmeldetag: 21.03.2001
(51) Int. Cl.: F16H 45/02

(54) **Anfahreinheit**

(30) Priorität: 31.08.2000 DE 10043146; 02.03.2001 DE 10110076
(71) Anmelder: Voith Turbo GmbH & Co. KG, 89522 Heidenheim (DE)
(72) Erfinder: Höller, Heinz, 74564 Crailsheim (DE); Dr. Kernchen, Reinhard, 74589 Satteldorf (DE); Dr. Menne, Achim, 74564 Crailsheim (DE); Prof. Klement, Werner, 89520 Heidenheim (DE)
(74) Vertreter: Dr. Weitzel & Partner

(57) **Zusammenfassung**

Es betrifft eine Anfahreinheit (1)
- mit einem mit einem Antrieb koppelbaren Eingang (E) und einem mit dem Abtrieb koppelbaren Ausgang (A);
- mit einem Anfahrelement (2) in Form einer hydrodynamischen Kupplung (3), umfassend ein Pumpenrad (4) und ein Turbinenrad (5), die miteinander einen torusförmigen Arbeitsraum (6) bilden und eine drehfest mit dem Pumpenrad (4) gekoppelte Pumpenradschale (10);
- mit einer Überbrückungskupplung (7), umfassend wenigstens zwei miteinander direkt oder indirekt über weitere Übertragungsmittel reibschlüssig in Wirkverbindung bringbare Kupplungsscheiben - eine erste Kupplungsscheibe (8) und eine zweite Kupplungsscheibe (9).

## Beschreibung

Die Erfindung betrifft eine Anfahreinheit, im einzelnen mit den Merkmalen aus dem Oberbegriff des Anspruches 1; ferner eine Getriebebaueinheit mit einer Anfahreinheit und ein Antriebssystem mit einer erfindungsgemäß gestalteten Anfahreinheit.

Anfahreinheiten für den Einsatz in Schaltgetrieben, automatisierten Schaltgetrieben oder Automatgetrieben sind in einer Vielzahl von Ausführungen bekannt. Diese umfassen ein hydrodynamisches Bauelement in Form eines hydrodynamischen Drehzahl-/Drehmomentwandlers oder einer hydrodynamischen Kupplung. Bezüglich einer möglichen Ausführung einer Anfahreinheit für den Einsatz in Getrieben mit einer hydrodynamischen Kupplung wird auf die Druckschrift DE 198 04 635 A1 verwiesen. Diese offenbart eine Ausführung einer Anfahreinheit mit geringer axialer Baulänge, umfassend ein Pumpenrad und ein Turbinenrad, die miteinander einen torusförmigen Arbeitsraum bilden, wobei das Pumpenrad auf der Motorabtriebsseite angeordnet ist, d. h. das Turbinenrad ist räumlich zwischen einem Eingang der Anfahreinheit und dem Pumpenrad angeordnet. Das Pumpenrad ist zu diesem Zweck drehfest über ein Element, welches gleichzeitig die Pumpenradschale bildet, mit dem Eingang bzw. mit einem mit diesem gekoppelten Antrieb drehfest verbunden. Es ist eine Überbrückungskupplung vorgesehen, welche parallel zur hydrodynamischen Kupplung geschaltet ist. Diese ermöglicht eine Leistungsübertragung vom Eingang der Anfahreinheit zum Ausgang unter Umgehung des hydrodynamischen Bauelementes. Die Überbrückungskupplung ist dabei als separates Bauelement neben der Einheit aus Pumpenrad und Turbinenrad angeordnet. Des weiteren umfaßt die Anfahreinheit eine Vorrichtung zur Dämpfung von Schwingungen, welche in einem Durchmesserbereich angeordnet ist, der oberhalb der radial äußeren Abmessung des torusförmigen Arbeitsraumes der hydrodynamischen Kupplung angeordnet ist und Bestandteil der Überbrückungskupplung ist bzw. ein Kupplungselement bildet. Anders ausgedrückt ist die Vorrichtung zur Dämpfung von Schwingungen im wesentlichen im Bereich einer Ebene oder geringfügig versetzt zueinander mit der hydrodynamischen Kupplung angeordnet. Diese Lösung baut zwar schon relativ kurz, erfüllt jedoch hinsichtlich der axialen Baulänge nicht die Erfordernisse bestimmter vorgegebener Einbausituationen. Des weiteren ist diese Ausführung aufgrund der Vielzahl von Funktionselementen durch eine hohe Bauteilanzahl sowie Montageaufwand charakterisiert.

Der Erfindung liegt daher die Aufgabe zugrunde, eine Anfahreinheit der eingangs genannten Art, umfassend eine hydrodynamische Kupplung und eine Überbrückungskupplung, welche parallel geschaltet sind, derart weiterzuentwicklen, daß diese durch einen geringen Bauraumbedarf in axialer Richtung sowie eine geringe Bauteilanzahl charakterisiert ist. Der konstruktive Aufwand sollte dabei möglichst gering gehalten werden.

Die erfindungsgemäße Lösung ist durch die Merkmale des Anspruches 1 charakterisiert. Vorteilhafte Ausgestaltungen sind in den Unteransprüchen wiedergegeben.

Die Anfahreinheit umfaßt einen mit einem Antrieb koppelbaren Eingang und einen mit einem Abtrieb koppelbaren Ausgang. Zwischen dem Eingang und dem Ausgang ist eine hydrodynamische Kupplung mit einem Turbinenrad und einem Pumpenrad, die miteinander einen torusförmigen Arbeitsraum bilden, angeordnet. Dem Pumpenrad ist dabei eine sogenannte Pumpenradschale zugeordnet, welche drehfest mit diesem verbunden ist und das Turbinenrad in axialer Richtung umschließt. Die Pumpenradschale kann dabei einteilig mit dem Pumpenrad ausgeführt sein, vorzugsweise werden jedoch mehrteilige Ausführungen verwendet, wobei die drehfeste Verbindung über entsprechende Verbindungselemente oder andere Kopplungsmöglichkeiten erfolgt. Die Anfahreinheit umfaßt des weiteren eine schaltbare Kupplung in Form einer Überbrückungskupplung, welche zur hydrodynamischen Kupplung parallel geschaltet ist. Dies bedeutet, daß während eines Großteils des Betriebes der Anfahreinheit die Leistungsübertragung über nur eines der beiden Elemente - hydrodynamische Kupplung oder Überbrückungskupplung - erfolgt. Im erstgenannten Fall erfolgt die Leistüngsübertragung über einen hydrodynamischen Leistungszweig unter Ausnutzung der Vorteile der hydrodynamischen Leistungsübertragung, während im zweiten Fall die Leistungsübertragung im wesentlichen mechanisch durch die mechanische Durchkupplung erfolgt. Es besteht dabei jedoch auch die Möglichkeit, daß beide Elemente zumindest im Übergangsbereich, d. h. bei Umschaltung zwischen hydrodynamischem und mechanischem Leistungszweig gemeinsam in Eingriff stehen. Dieser gemeinsame Eingriff ist jedoch von sehr beschränkter Dauer und sollte bestimmte vordefinierte Zeiten nicht überschreiten. In einer Weiterentwicklung des erfindungsgemäßen Grundgedankens können auch beide Kupplungen - hydrodynamische Kupplung und mechanische Kupplung gemeinsam an der Leistungsübertragung beteiligt sein, d.h. beide übertragen jeweils einen Teil der Gesamtleistung.

Die schaltbare Kupplung, insbesondere Überbrückungskupplung ist als mechanische Kupplung, vorzugsweise in Scheibenbauweise, ausgeführt. Diese umfaßt mindestens ein erstes Kupplungselement in Form einer Kupplungseingangsscheibe, auch erste Kupplungsscheibe genannt und ein zweites Kupplungselement in Form einer Kupplungsausgangsscheibe, auch zweite Kupplungsscheibe genannt, die miteinander wenigstens mittelbar, d. h. entweder direkt oder indirekt über weitere Übertragungsmittel, beispielsweise in Form von weiteren Scheiben, reibschlüssig miteinander in Wirkverbindung bringbar sind. Erfindungsgemäß ist eine Integration von Bestandteilen der Überbrückungskupplung im hydrodynamischen Bauelement vorgesehen. Diese wird dadurch realisiert, daß ein Kupplungselement, in der Regel eine erste Kupplungsscheibe drehfest mit der Primärradschale verbunden ist, während die andere zweite Kupplungsscheibe drehfest mit dem Turbinenrad verbunden ist. Den Kupplungsscheiben sind Mittel zur Erzeugung einer Anpreßkraft und damit zur Erzeugung einer wenigstens mittelbaren reibschlüssigen Verbindung zwischen erster Kupplungsscheibe und zweiter Kupplungsscheibe zugeordnet.

Die erfindungsgemäße Lösung ermöglicht durch Integration der einzelnen Elemente der Überbrückungskupplung in das Anfahrelement in Form der hydrodynamischen Kupplung eine Ausgestaltung einer Anfahreinheit mit sehr geringem Bauraumbedarf in axialer Richtung, da hier bereits ohnehin vorhandene Bauelemente gleichzeitig mit der Übernahme der Funktion des anderen Elementes betraut werden.

Die Mittel zur Erzeugung einer Anpreßkraft umfassen mindestens ein mit Druckmittel beaufschlagbares Kolbenelement. Dieses kann separat den Kupplungsscheiben zugeordnet werden. In einer besonders kompakten und damit vorteilhaften Ausgestaltung wird jedoch das Turbinenrad als Kolbenelement genutzt. Der Druckraum zur Beaufschlagung des Kolbenelementes wird vom Turbinenrad umschlossenen Teil des torusförmigen Arbeitsraumes gebildet. Bezüglich der konstruktiven Ausführung zur Übernahme der Funktion eines Elementes und des weiteren eines Elementes der Mittel zur Erzeugung einer Anpreßkraft bestehen im wesentlichen die nachfolgend genannten Möglichkeiten:
1. drehfeste Kopplung des Turbinenrades mit dem Ausgang der Anfahreinheit jedoch axiale Verschiebbarkeit des Turbinenrades;
2. drehfeste Verbindung des Turbinenrades mit dem Ausgang der Anfahreinheit und in axialer Richtung elastische Ausführung der Kopplung zwischen Turbinenrad und Ausgang.

Im erstgenannten Fall wird die indirekt über weitere Elemente oder direkt erfolgende reibschlüssige Verbindung zwischen der ersten Kupplungsscheibe und der zweiten, drehfest mit dem Turbinenrad verbundenen Kupplungsscheibe durch die Verschiebung des Turbinenrades gewährleistet, während im zweiten Fall lediglich eine reversible Verformung der Verbindung zwischen Turbinenrad und Ausgang der Anfahreinheit die Anpreßung ermöglicht. Die zweite Lösung ist dabei lediglich bei Ausführungen mit im entkuppelten Zustand geringem axialen Abstand zwischen erster und zweiter Kupplungsscheibe geeignet, während die erstgenannte Lösung auch für größere Abstände denkbar ist. Die axiale Verschiebbarkeit des Turbinenrades erfolgt dabei in einem Bereich von 0,1 bis 2 mm.

Um eine nahezu selbsttätige Überbrückung und des weiteren eine sichere Betriebsweise bei Leistungsübertragung über das hydrodynamische Kupplungselement zu realisieren bedarf es bei axialer Verschiebbarkeit des Turbinenrades einer Gegenkraft, welche das Turbinenrad in seiner Lage gegenüber dem Pumpenschaufelrad fixiert. Diese Gegenkraft wird erfindungsgemäß von zum Arbeitsraum zugeführtem Betriebsmittel erzeugt, welches entlang des Außenumfanges des Turbinenrades zwischen den einzelnen Kupplungsscheiben der Überbrückungskupplung in den Bereich der Trennebene zwischen Pumpenrad und Turbinenrad im Bereich des äußeren Durchmessers des torusförmigen Arbeitsraumes geführt wird und von dort in das Pumpenrad eingebracht wird. Üblicherweise liegen beide Kupplungsscheiben nahe aufeinander. Der dabei verbleibende Spalt dient als Drosselstelle für das durchströmende Betriebsmittel. Durch diese Drossel stellt sich eine Druckdifferenz zwischen den Kolbenflächen ein, aus der die erforderliche Anpreßkraft für das Öffnen und Schließen für die Überbrückung resultiert. Dies kann im einfachsten Fall bei Ausführungen mit drehfester Verbindung und axialer Verschiebbarkeit durch Vorspannung des Turbinenrades realisiert werden, beispielsweise mittels mindestens einer Federeinrichtung. Dies ist in Analogie auch bei der in axialer Richtung erfolgenden elastischen Anbindung des Turbinenrades an den Ausgang möglich. Bei Umschaltung vom hydrodynamischen Betrieb auf mechanischen Durchtrieb wird die Betriebsmittelzuführung hinsichtlich ihrer Richtung geändert, d. h. die Durchströmung erfolgt nicht mehr zentripedal und um den Außenumfang des Turbinenrades, sondern zentrifugal. Die zwischen den Kupplungsscheiben durch das Betriebsmittel am Turbinenrad bei zentripedaler Durchströmung wirksame Gegenkraft fällt weg. Das Betriebsmittel wird nunmehr im Bereich des Innenumfanges dem torusförmigen Arbeitsraum zugeführt und durchströmt die hydrodynamische Kupplung zentrifugal. Die durch das Betriebsmittel am Turbinenrad erzeugte Druckkraft bewirkt eine Verschiebung oder Verkippung des Turbinenrades in Richtung vom Pumpenrad weg, wobei die mit dem Turbinenrad drehfest verbundene Kupplungsscheibe reibschlüssig mit der mit der Pumpenradschale gekoppelten Kupplungsscheibe in Wirkverbindung gebracht wird.

Bezüglich der Anbindung der ersten und zweiten Kupplungsscheibe an das Turbinenrad bzw. die Pumpenradschale bestehen eine Vielzahl von Möglichkeiten. Die räumliche Anordnung erfolgt in axialer Richtung betrachtet neben dem torusförmigen Arbeitsraum bzw. dahinter. Die Anordnung in radialer Richtung ist durch Außen- und Innenabmessungen gekennzeichnet, welche vorzugsweise im Bereich zwischen dem äußeren und dem inneren Durchmesser des torusfömigen Arbeitsraumes liegen. Vorzugsweise sind die Reibflächen, welche von den Kupplungsscheiben gebildet werden, parallel zur Trennebene zwischen dem Pumpenrad und dem Turbinenrad ausgerichtet. Fertigungstechnische Toleranzen sind ohne Probleme ausgleichbar.

Vorzugsweise erfolgt die drehfeste Kopplung mit dem Turbinenrad direkt an der Rückseite des den Torus bildenden Teiles des Turbinenrades. Die drehfeste Verbindung der einzelnen Kupplungsscheiben mit dem Turbinenrad und dem Pumpenrad bzw. der Pumpenradschale kann ebenfalls auf unterschiedliche Art und Weise realisiert werden. Denkbar sind
a) die einteilige Ausführung von Kupplungsscheibe und Turbinenrad und/oder Kupplungsscheibe und Pumpenradschale;
b) Ausbildung der einzelnen Kupplungsscheiben als separate Bauelemente und drehfeste Kopplung über entsprechende Verbindungselemente mit dem Pumpenrad und/oder dem Turbinenrad.

In beiden Fällen kann die Reibfläche direkt von der Kupplungsscheibe, d.h. im erstgenannten Fall von der Außenseite des Turbinenrades und einer Innenfläche der Pumpenradschale und im zweiten Fall vom separaten Bauelement gebildet werden oder aber von einem, dem Außenumfang des Turbinenrades oder den einzelnen Kupplungsscheiben zugeordneten Reibbelag.

Bei der Ausführung der hydrodynamischen Kupplung handelt es sich um eine Strömungskupplung, d.h. ein Bauelement, welches bei Leistungsübertragung zwischen einem Antrieb und einem Abtrieb nur eine Drehzahlwandlung zuläßt, d.h. gegenüber einem Wandler frei von einer Wandlung des Drehmomentes und damit zwangsweise gekoppelt der Drehzahl ist. Diese können geregelt oder ungeregelt sein. Geregelte hydrodynamische Kupplungen sind Kupplungen, bei denen der Füllungsgrad während des Betriebes beliebig zwischen voller Füllung und Entleerung verändert werden kann, wodurch die Leistungsaufnahme und damit die Übertragungsfähigkeit der Kupplung einstellbar und beim Einsatz in Fahrzeugen eine stufenlose lastabhängige Drehzahlregelung der Antriebsmaschine und/oder Abtriebsseite ermöglicht wird. Die hydrodynamische Kupplung kann dabei als Kupplung mit einem torusförmigen Arbeitsraum, der von einem als Pumpenrad fungierenden Primärschaufelrad und einem als Turbinenrad fungierenden Sekundärschaufelrad gebildet wird oder als sogenannte Doppelkupplung, d.h. mit zwei, vom Primärschaufelrad und Sekundärschaufelrad gebildeten torusförmigen Arbeitsräumen ausgebildet sein. Die Regelbarkeit erfolgt primär über die Änderung des Massenstromes, d.h. die Beeinflussung des Füllungsgrades im Arbeitsraum bzw. des Betriebsmittelumlaufes im Arbeitskreislauf. Die Steuerung- und/oder Regelung des Füllungsgrades der hydrodynamischen Kupplung erfolgt dabei vorzugsweise über eine Drucksteuerung. Gekoppelt mit der Füllungsgradänderung ist dabei die Veränderung des Absolutdruckes des torusförmigen Arbeitsraumes. Daher können Teilfüllungszustände über die Veränderung des Absolutdruckes eingeregelt werden.

Eine besonders vorteilhafte Weiterentwicklung zur Gewährleistung der alleinigen als auch gemeinsamen Leistungsübertragung über beide Kupplungen - hydrodynamische Kupplung und schaltbare Kupplung - und Steuerbarkeit mindestens eines über eine der beiden Kupplungen übertragbaren Leistungsanteiles besteht darin, jedem der beiden wahlweise als Zulauf oder Ablauf nutzbaren Betriebsmittelzufurkanäle- oder Räume eine steuerbare Ventileinrichtung zur Steuerung des Druckes zuzuordnen, wobei über den sich in der hydrodynamischen Kupplung sich einstellenden Absolutdruck die Leistungsübertragung über die hydrodynamische Kupplung steuerbar ist, während über den Differenzdruck die Leistungsaufnahme der schaltbaren Kupplung einstellbar ist.

Unter einem weiteren besonders vorteilhaften Aspekt der Erfindung umfaßt die Anfahreinheit eine Vorrichtung zur Dämpfung von Schwingungen, insbesondere einen Torsionsschwingungsdämpfer. Dieser ist vorzugsweise zum hydrodynamischen Bauelement in Form der hydrodynamischen Kupplung und zur Überbrückungskupplung in Reihe angeordnet. Dies wird dadurch erzielt, daß die Vorrichtung zur Dämpfung von Schwingungen zwischen dem Turbinenrad und dem Ausgang angeordnet ist. Das bedeutet, daß das Turbinenrad mit dem Eingang der Vorrichtung zur Dämpfung von Schwingungen gekoppelt ist oder über die reibschlüssige Verbindung bei Überbrückung des hydrodynamischen Leistungszweiges der Eingang der Vorrichtung zur Dämpfung von Schwingungen mit dem Pumpenrad über die Pumpenradschale drehfest verbunden wird. Räumlich erfolgt die Anordnung der Vorrichtung zur Dämpfung von Schwingungen dabei in axialer Richtung betrachtet im wesentlichen im Bereich bzw. in einer Ebene mit dem hydrodynamischen Bauelement. In radialer Richtung ist die Vorrichtung zur Dämpfung von Schwingungen innerhalb des den Innenumfanges des den torusförmigen Arbeitsraum bildenden Teiles der hydrodynamischen Kupplung beschreibenden Durchmessers angeordnet. Mit dieser Ausführung wird neben einer besonders kurzen axialen Baulänge auch der in radialer Richtung zur Verfügung stehende Bauraum optimal ausgenutzt. Bezüglich der Ausführung der Vorrichtung zur Dämpfung von Schwingungen bestehen keinerlei Restriktionen, d. h. jegliche Art von Schwingungsdämpfer ist denkbar. Zum Einsatz gelangen dabei beispielsweise Vorrichtungen zur Dämpfung von Schwingungen, welche lediglich auf Reibdämpfung basieren oder hydraulische Dämpfungseinrichtungen. Die Ausführung als hydraulische Dämpfungseinrichtung umfaßt neben einem Primärteil und einem Sekundärteil, welche drehfest miteinander zum Zwecke der Drehmomentenübertragung koppelbar sind, und in Umfangsrichtung gegeneinander um einen bestimmten Winkel verdrehbar sind, Mittel zur Feder- und/oder Dämpfungskopplung zwischen dem Primärteil und dem Sekundärteil. Die Mittel zur Dämpfungskopplung umfassen dabei mit Hydraulikflüssigkeit füllbare Kammern, in welche Schwingungen verlagert werden. Die Vorrichtung zur Dämpfung von Schwingungen muß dabei lediglich auf das Ausgangsmoment am Turbinenrad ausgelegt werden, weshalb die Vorrichtung zur Dämpfung von Schwingungen in radialer und axialer Richtung sehr klein baut und in der Regel keine Vergrößerung der durch das hydrodynamische Bauelement vorgegebenen Abmessungen der Anfahreinheit bewirkt.

Andere Möglichkeiten der Anbindung sind ebenfalls denkbar, beispielsweise die Anordnung des Torsionsschwingungsdämpfers in Reihe zur schaltbaren Kupplung, d.h. davor oder dahinter oder vor der Leistungsverzweigung.

Bezüglich der räumlichen Anordnung von Pumpenrad und Turbinenrad bezogen auf den Eingang und den Ausgang der Anfahreinheit bestehen im wesentlichen die zwei folgenden Möglichkeiten:
1. Anordnung des Pumpenrades in axialer Richtung zwischen dem Eingang der Anfahreinheit und dem Turbinenrad der hydrodynamischen Kupplung;
2. Anordnung des Turbinenrades der hydrodynamischen Kupplung in axialer Richtung zwischen dem Eingang der Anfahreinheit und dem Pumpenrad.
Vorzugsweise findet die letztgenannte Möglichkeit Anwendung, da in diesem Fall trotz geringem Bauraumes die Kollisionsmöglichkeiten der einzelnen Elemente optimal beherrscht werden können.

Die erfindungsgemäße Lösung eignet sich insbesondere für den Einsatz in Automatgetrieben. Diese können als Schaltgetriebe oder stufenlose Getriebe ausgeführt sein. Die Anfahreinheit kann dabei als Baueinheit separat vormontiert handelbar sein. Die Verbindung mit dem Getriebe erfolgt dabei durch Integration im Getriebegehäuse oder Hintereinanderschaltung mit Schaltstufen oder einem stufenlosen Getriebeteil, bspw. Zugmittelgetriebe oder Toroidalgetriebe, wobei in beiden Fällen die Kopplung beispielsweise durch Aufstecken auf eine mit den Nachschaltstufen bzw. stufenlosen Getriebeteil koppelbare Welle realisiert werden kann.

Unter einem weiteren Aspekt der Erfindung ist die erfindungsgemäße Anfahreinheit sowohl für den Einsatz in Antriebssträngen in stationären Anlagen als auch Fahrzeugen geeignet.

Die erfindungsgemäße Lösung ist nachfolgend anhand von Figuren erläutert. Darin ist im einzelnen folgendes dargestellt:
- Figur 1a und 1b: verdeutlichen eine vorteilhafte Ausgestaltung einer erfindungsgemäßen Anfahreinheit;
- Figur 2: verdeutlicht eine Weiterentwicklung einer Anfahreinheit gemäß Figur 1;
- Figur 3: verdeutlicht eine vorteilhafte Ausführung einer Anfahreinheit mit gegenüber den Ausführungen gemäß Figur 1 und Figur 2 vertauschten Schaufelrädern;
- Figur 4a und 4b: verdeutlichen die beiden Durchströmungszustände anhand einer Ausführung gemäß Figur 2;
- Figur 5: zeigt in schematisch stark vereinfachter Darstellung eine Möglichkeit zur Realisierung einer Drucksteuerung;
- Figur 6: verdeutlicht eine bauteilmäßige Vereinfachung gemäß Figur 5.

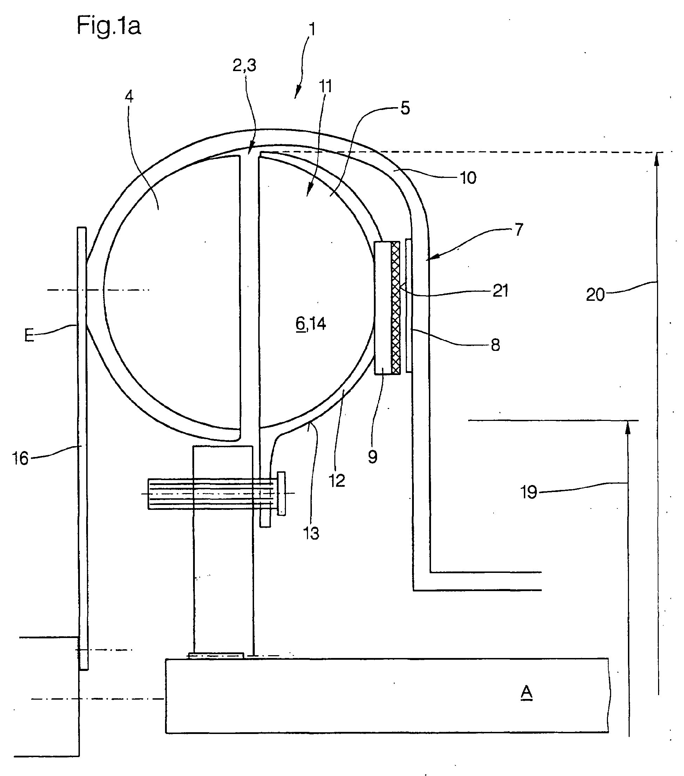

Die Figur 1a verdeutlicht in schematisch vereinfachter Darstellung den Grundaufbau einer erfindungsgemäßen Anfahreinheit 1. Diese umfaßt einen, mit einem Antrieb koppelbaren Eingang E und einen, mit nachgeschalteten Übersetzungsstufen oder einem Abtrieb koppelbaren Ausgang A. Die Anfahreinheit 1 umfaßt ein Anfahrelement 2 in Form einer hydrodynamischen Kupplung 3. Die hydrodynamische Kupplung 3 umfaßt zwei Schaufelräder, ein als Pumpenrad 4 fungierendes Primärrad und ein als Turbinenrad 5 fungierendes Sekundärrad, die miteinander einen torusförmigen Arbeitsraum 6 bilden. Die Anfahreinheit 1 umfaßt des weiteren eine parallel zum Anfahrelement 2 in Form der hydrodynamischen Kupplung 3 geschaltete Überbrückungskupplung 7. Unter Überbrückungskupplung wird dabei eine schaltbare Kupplungseinrichtung verstanden, welche in einem Antriebssystem mit mehreren Leistungszweigen eine Leistungsübertragung unter Umgehung eines Leistungszweiges ermöglicht. Die Überbrückungskupplung 7 umfaßt mindestens zwei miteinander reibschlüssig in Wirkverbindung bringbare Kupplungselemente, vorzugsweise in Form von Kupplungsscheiben - in Kraftflußrichtung zwischen dem Eingang E und dem Ausgang A der Anfahreinheit 1 betrachtet eine erste Kupplungsscheibe 8, welche auch als Kupplungseingangsscheibe bezeichnet werden kann und eine zweite Kupplungsscheibe 9, die als Kupplungsausgangsscheibe bezeichnet wird -. Eine Wirkverbindung durch Reibschluß zwischen der ersten Kupplungsscheibe 8 und der zweiten Kupplungsscheibe 9 kann dabei direkt oder indirekt realisiert werden, im erstgenannten Fall wird die Reibpaarung von der ersten Kupplungsscheibe 8 und der zweiten Kupplungsscheibe 9 gebildet, während im zweiten Fall weitere Reibflächen tragende Elemente zwischengeschaltet werden. Das Pumpenrad 4 umfaßt eine Pumpenradschale 10. Diese wird entweder von einem separaten Bauelement, welches drehfest mit dem Pumpenrad 4 gekoppelt ist, gebildet oder ist als integrale Baueinheit mit dem Pumpenrad 4 ausgeführt. Die Pumpenradschale 10 erstreckt sich dabei in Einbaulage in axialer Richtung im wesentlichen über die axiale Erstreckung des Turbinenrades 5 bzw. umschließt dieses zumindest teilweise auch in radialer Richtung. Vorzugsweise erfolgt das Umschließen des Turbinenrades 5 durch die Pumpenradschale 10 bzw. bei mehrteiliger Ausführung von deren Einzelteilen derart, daß diese sich in radialer Richtung bis in den Bereich des Ausganges A erstrecken. Das Turbinenrad 5 ist direkt oder indirekt, d. h. über weitere Übertragungselemente, mit dem Ausgang A der Anfahreinheit 1 verbunden. Erfindungsgemäß ist die erste Kupplungsscheibe 8 drehfest mit dem Pumpenrad 4, insbesondere der Pumpenradschale 10 verbunden, während die zweite Kupplungsscheibe 9 drehfest mit dem Turbinenrad 5 gekoppelt ist. Vorzugsweise erfolgt die Anordnung der Überbrückungskupplung 7 in radialer Richtung im Bereich der radialen Erstreckung des torusförmigen Arbeitsraumes 6. Es sind erfindungsgemäß des weiteren Mittel 11 zur Erzeugung einer Anpreßkraft zur Realisierung einer reibschlüssigen Verbindung zwischen beiden Kupplungsscheiben, der Kupplungsscheibe 8 und zweiten Kupplungsscheibe 9, vorgesehen. Die Mittel 11 umfassen vorzugsweise ein mit Druckmittel beaufschlagbares Kolbenelement 12, wobei die Funktion des Kolbenelementes 12 erfindungsgemäß vom Turbinenrad 5 übernommen wird. Das Turbinenrad 5 ist zu diesem Zweck entweder, wie in der Figur angedeutet, drehfest mit dem Ausgang A verbunden, jedoch in axialer Richtung verschiebbar ausgeführt oder die Anbindung an den Ausgang A erfolgt direkt drehfest, in Umfangsrichtung drehsteif und in axialer Richtung elastisch. Bevorzugt wird jedoch eine Ausführung mit axialer Verschiebbarkeit. Um während des Betriebes die Funktionsweise der hydrodynamischen Kupplung 3 und damit die Leistungsübertragung über den sich im torusförmigen Arbeitsraum 6 einstellenden Arbeitskreislauf zu gewährleisten, erfolgt die Betriebsmittelzufuhr zum Arbeitsraum 6 um den Außenumfang 13 des Turbinenrades 5 und damit zwischen den einzelnen Elementen der Überbrückungskupplung 7, d. h. zumindest zwischen der ersten Kupplungsscheibe 8 und der zweiten Kupplungsscheibe 9. Die durch die Führung bei Zufuhr des Betriebsmittelstromes bedingte Gegenkraft ermöglicht während der Leistungsübertragung in der hydrodynamischen Kupplung 3 eine axiale Fixierung des Turbinenrades 5. Entfällt diese Gegenkraft durch Umlenkung bzw. Änderung der Zuführung des Betriesmittelstromes zum Arbeitsraum, bewirkt das Betriebsmittel im torusförmigen Arbeitsraum 6 aufgrund des sich im Arbeitsraum 6 aufbauenden Druckes eine Axialkraft, welche nicht vom Turbinenrad 5 abgestützt wird, sondern zu einer Verschiebung des Turbinenrades 5 in axialer Richtung führt. Diese Verschiebung liegt dabei in einer Größenordnung zwischen 0,1 und 2 mm. Die Verschiebung bewirkt dabei ein reibschlüssig miteinander in Wirkverbindung bringen der beiden Kupplungsscheiben, der Kupplungsscheibe 8 und der zweiten Kupplungsscheibe 9, so daß das Turbinenrad 5 mechanisch an das Pumpenrad 4 gekoppelt wird, wobei das mit einer Druckkraft beaufschlagte Kolbenelement 12 in der hydrodynamischen Kupplung 3 integriert ist und zwar vom Turbinenrad 5 gebildet wird. Dabei übernimmt der die zweite Kupplungsscheibe 9 tragende Teil des Turbinenrades 5 die Funktion des Kolbenelementes 12 und das sich im torusförmigen Arbeitsraum 6 befindliche Betriebsmittel die Funktion der Druckbeaufschlagung, bei einem Kolbenelement 12 die Funktion der Druckkammer 14.

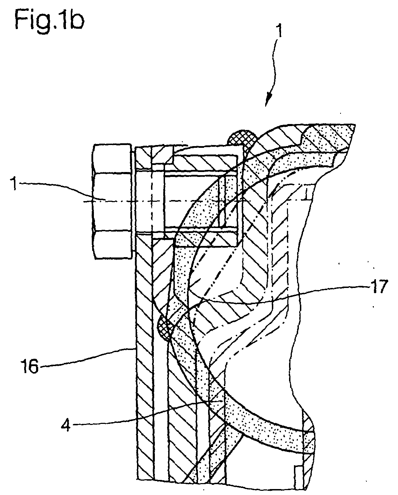

Bei der in der Figur 1 dargestellten Ausführung der Anfahreinheit 1 handelt es sich um eine besonders vorteilhafte Anordnung der einzelnen Elemente - Pumpenrad 4 und Turbinenrad 5 - der hydrodynamischen Kupplung 3. Bei dieser sind in Kraftübertragungsrichtung zwischen dem Eingang E und dem Ausgang A der Anfahreinheit 1 das Turbinenrad 5 räumlich in axialer Richtung hinter dem Pumpenrad 4 bzw. neben diesem angeordnet, während das Pumpenrad 4 räumlich zwischen dem Eingang E und dem Turbinenrad 5 angeordnet ist. Aufgrund der Integration der Mittel 11 zur Erzeugung einer Anpreßkraft zur Realisierung einer reibschlüssigen Verbindung der einzelnen Elemente der Überbrückungskupplung 7 in die hydrodynamische Kupplung 3 kann die Anzahl der erforderlichen Bauelemente auf ein Minimum reduziert, da keine zusätzliche separate Einrichtung zur Erzeugung bzw. Bereitsstellung der Anpreßkraft für die einzelnen Elemente, insbesondere erste Kupplungsscheibe 8 und zweite Kupplungsscheibe 9 der Überbrückungskupplung 7 erforderlich ist. Ein weiterer Vorteil besteht aufgrund der integrierten Ausführung in der kurzen axialen Baulänge. Diese kann bei optimierten Schaufelrädern mit der erfindungsgemäßen Lösung gegenüber den Ausführungen im Stand der Technik noch weiter verkürzt werden.

Unter dem Aspekt der Verkürzung des erforderlichen axialen Bauraumes erfolgt gemäß einer vorteilhaften Weiterentwicklung einer erfindungsgemäßen Lösung gemäß Figur 1a die Anbindung des Pumpenrades 4 an den Antrieb mittels Befestigungselementen 15, wobei der Antrieb hier über die Kopplung sogenannter Flexplates 16 mit einer Kurbelwelle 26 einer im einzelnen nicht dargestellten Antriebsmaschine 27 erfolgt, d. h. in axialer Richtung mit nachgiebig und in Umfangsrichtung drehsteif ausgeführten Membranen. Zur Reduzierung der axialen Baulänge ist es erfindungsgemäß vorgesehen, daß die Befestigungselemente 15 sich teilweise bis in den Schaufelgrund 17 des Pumpenrades 4 erstrecken. Dies wird anhand eines Details aus einer konstruktiven Ausführung einer Anfahreinheit 1 gemäß Figur 1a in der Figur 1b verdeutlicht. Aufgrund der drehfesten Anbindung zwischen dem Antrieb bzw. dem Eingang E und dem Pumpenrad 4 besteht keinerlei Relativbewegung zwischen den Befestigungselementen 15 und dem Pumpenrad 4, insbesondere dem Schaufelgrund 17 des Pumpenrades 4, Eine Störung der während des Betriebes sich einstellenden Meridianströmung im torusförmigen Arbeitsraum 6 bzw. eine Beeinflussung dessen erfolgt nicht. Diese Art der Erstreckung der Befestigungselemente 15 in den Schaufelgrund 17 ist anhand eines Ausschnittes aus einer erfindungsgemäß gestalteten hydrodynamischen Kupplung 3 in einer Einzelheit wiedergegeben. Daraus wird ersichtlich, daß im Bereich der Anbindung an den Antrieb, insbesondere die Flexplates 16 der Schaufeldgrund 17 durch andere Abmessungen charakterisiert ist, als bei herkömmlichen bekannten Ausführungen.

Vorzugsweise ist gemäß Figur 1a die zweite Kupplungsscheibe 9 an der Rückseite 18 des Turbinenrades angeordnet. Die Anordnung erfolgt dabei parallel zur Trennebene zwischen dem Pumpenrad 4 und dem Turbinenrad 5, vorzugsweise im Bereich zwischen den Abmessungen des inneren Durchmessers 19 und des äußeren Durchmessers 20 des torusförmigen Arbeitsraumes 6. Dabei wird die zweite Kupplungsscheibe 9 vorzugsweise direkt vom Turbinenrad 5 gebildet, wobei die Reibfläche 21 von einem, auf die Außenfläche des Sekundärrades 5 aufgebrachten Belags erzeugt wird.

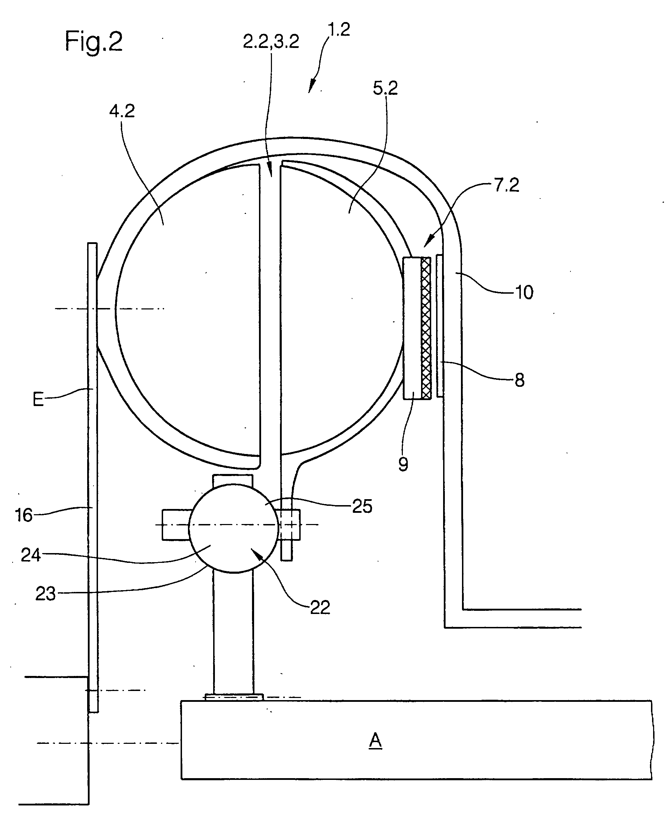

Unter einem weiteren Aspekt der Erfindung umfaßt die Anfahreinheit 1.2 gemäß Figur 2 eine Vorrichtung zur Dämpfung von Schwingungen 22, insbesondere einen Torsionsschwingungsdämpfer. Dieser kann vielgestaltig ausgeführt sein, im einfachsten Fall als einfacher Reibdämpfer. Es sind jedoch auch Ausführungen mit hydraulischer Dämpfung denkbar. Bezüglich der konkreten Ausgestaltung einer Vorrichtung zur Dämpfung von Schwingungen 22 kann auf die aus dem Stand der Technik bekannten Ausführungen verwiesen werden. Die konkrete Auswahl liegt im Ermessen des zuständigen Fachmannes. Gemäß einer besonders vorteilhaften Ausgestaltung sind dabei das hydrodynamische Bauelement, die hydrodynamische Kupplung 3.2, die Überbrückungskupplung 7.2 und die Vorrichtung 22 zur Dämpfung von Schwingungen in Reihe geschaltet. Die Vorrichtung zur Dämpfung von Schwingungen 22 umfaßt dabei ein Primärteil 25, welches drehfest mit dem Turbinenrad 5 verbunden ist und damit der zweiten Kupplungsscheibe 9 und ein Sekundärteil 23, welches drehfest mit dem Ausgang gekoppelt ist. Zwischen Primärteil 23 und Sekundärteil 23 sind Mittel zur Dämpfungs- und Federkopplung 24 vorgesehen. Die Vorrichtung zur Dämpfung von Schwingungen 22 ist je nach Leistungsübertragungszweig bei der Leistungsübertragung über die hydrodynamische Kupplung 3.2 zwischen der hydrodynamischen Kupplung 3.2, insbesondere dem Turbinenrad 5.2 und dem Ausgang A angeordnet, des weiteren bei Leistungsübertragung über die Überbrückungskupplung 7.2 zwischen der Überbrückungskupplung, insbesondere dem durch die zweite Kupplungsscheibe 9 gebildeten Ausgang der Überbrückungskupplung und dem Ausgang A der Anfahreinheit. In beiden Fällen ist die Vorrichtung 22 zur Dämpfung von Schwingungen dem jeweils leistungsübertragenden Element - hydrodynamische Kupplung 3.2 oder Überbrückungskupplung 7.2 - in Reihe nachgeschaltet. Der übrige Grundaufbau der Anfahreinheit 1.2 entspricht dem in der Figur 1a beschriebenen. Für gleiche Elemente werden dabei die gleichen Bezugszeichen verwendet.

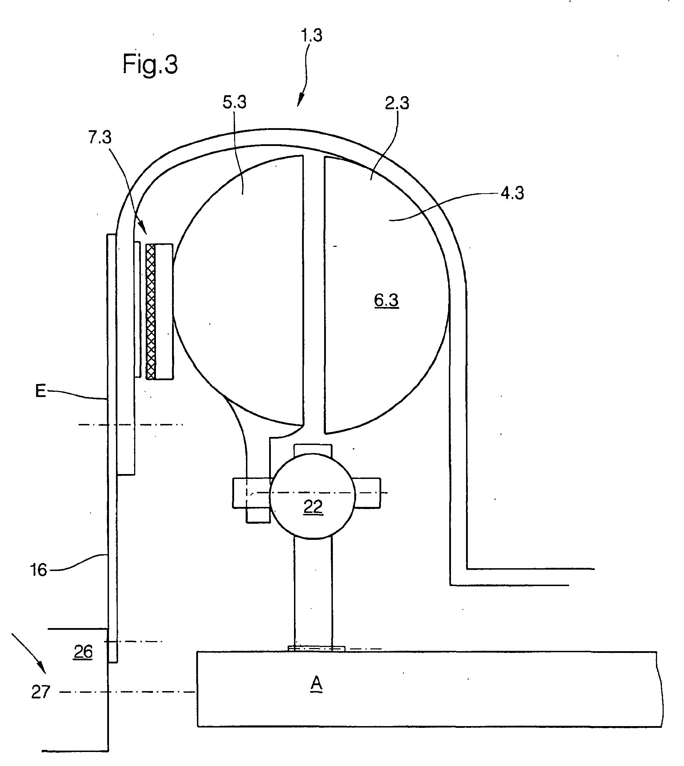

Die Figur 3 verdeutlicht in schematisch vereinfachter Darstellung eine weitere Ausgestaltung einer erfindungsgemäß gestalteten Anfahreinheit 1.3 mit einem Anfahrelement 2.3 in einer Form einer hydrodynamischen Kupplung 3.3. Die hydrodynamische Kupplung 3.3 umfaßt auch hier ein Primärrad 4.3 und Sekundärrad 5.3, welche miteinander einen torusförmigen Arbeitsraum 6 bilden. Des weiteren ist auch eine Überbrückungskupplung 7 vorgesehen, welche parallel zur hydrodynamischen Kupplung 3.3 geschaltet ist. Die Grundfunktion entspricht der in der Figur 1 und 2 beschriebenen. Für gleiche Elemente werden dabei auch die gleichen Bezugszeichen verwendet. Im Unterschied gegenüber Figur 1a und Figur 2 ist jedoch das Turbinenrad 5.3 räumlich in axialer Richtung betrachtet, zwischen dem Eingang E und dem Pumpenrad 4.3 angeordnet, d. h. das Pumpenrad 4.3 ist entgegen den Ausführungen gemäß Figur 1a und Figur 2 nicht auf der Motorseite sondern auf der Motorabtriebsseite angeordnet. Die Kopplung zwischen einem Antrieb, insbesondere dem Eingang E der Anfahreinheit 1.3 und dem Pumpenrad 4.3 erfolgt dabei unter Umschließung des Sekundärrades 5.3 in axialer Richtung, wobei die Anbindung des Turbinenrades 5.3 an den Abtrieb über den Ausgang A in radialer Richtung innerhalb des Zwischenraumes der Kopplung zwischen Eingang E und Pumpenrad 4.3 angeordnet ist und räumlich betrachtet zwischen Eingang E und Ausgang A der Anfahreinheit vor der Kopplung zwischen dem Eingang E und dem Pumpenrad 4.3.

Bei beiden Ausführungen gemäß Figur 2 und Figur 3 ist die Vorrichtung 22 zur Dämpfung von Schwingungen in Einbaulage im Bereich unterhalb des torusförmigen Arbeitsraumes 6, d. h. innerhalb des radial inneren Durchmessers 19, welcher die radial innere Abmessung des torusförmigen Arbeitsraumes 6 beschreibt, angeordnet.

Diese Anordnung der Vorrichtung 22 ist möglich, da bezüglich der Baugröße, insbesondere Dimensionierung der Vorrichtung 22 zur Dämpfung von Schwingungen keine Notwendigkeit der Überdimensionierung besteht, das das maximal anliegende Moment am Turbinenrad 5 des Moment am Pumpenrad 4 ist.

Die Figuren 1 bis 3 verdeutlichen vorteilhafte Ausgestaltungen erfindungsgemäß ausgeführter Anfahreinheiten 1, 1.2 und 1.3. Weitere Funktionen können durch zusätzliche Modifikationen realisiert werden und liegen im Ermessen des zuständigen Fachmannes.

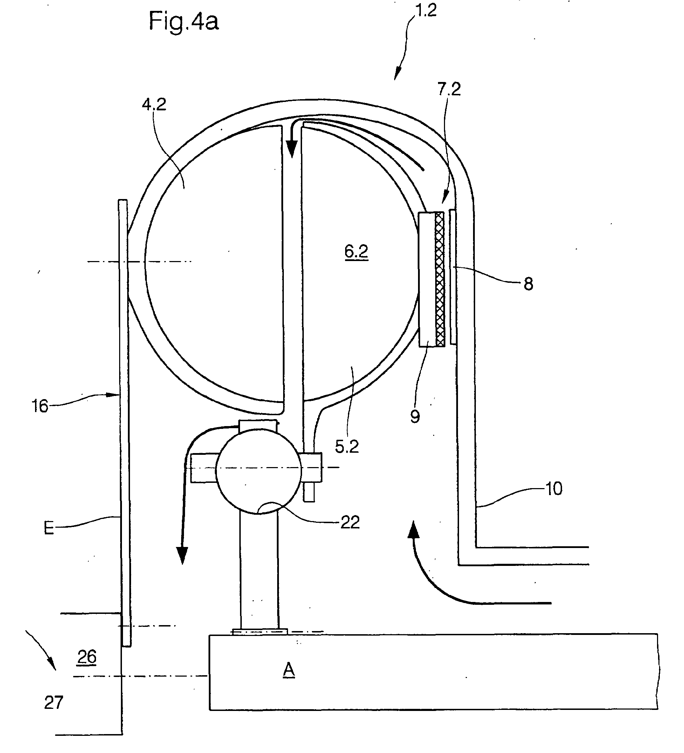

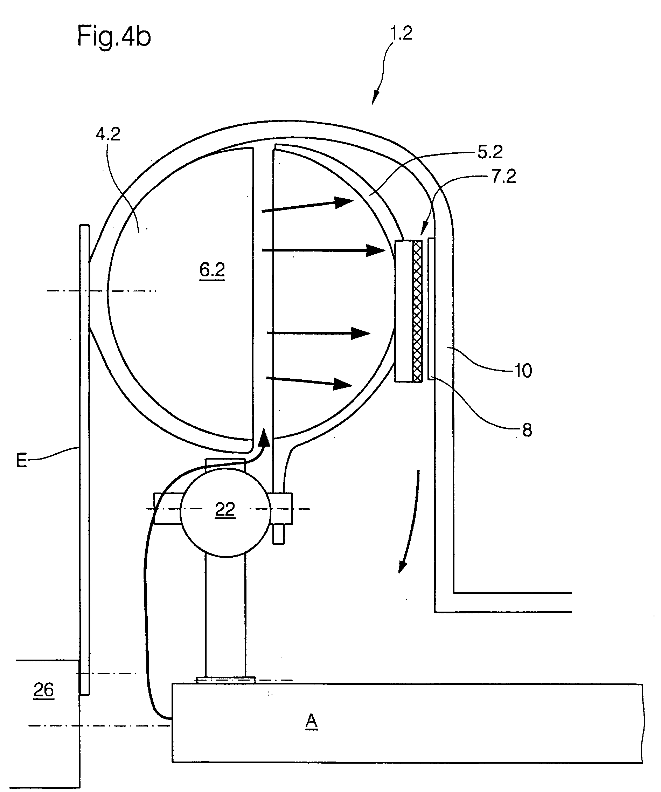

Die Figuren 4a und 4b verdeutlichen anhand einer Ausführung gemäß Figur 2 die Funktionsweise der erfindungsgemäß gestalteten Anfahreinheit 1.2, für gleiche Elemente werden gleiche Bezugszeichen verwendet. Figur 4a verdeutlicht dabei die Betriebsmittelzufuhr zum Arbeitsraum 6.2 während des hydrodynamischen Betriebes, d.h. Leistungsübertragung über die hydrodynamisch Kupplung 3.2 um den Außenumfang des Turbinenrades zur Trennebene zwischen Pumpen- und Turbinenrad 5.2 im Bereich des äußeren Durchmessers des torusförmigen Arbeitsraumes 6.2 und von dort in den Arbeitsraum 6.2. Figur 4b verdeutlicht dem gegenüber die geänderte Betriebsmittelführung bei Umschaltung auf die Überbrückungskupplung 7.2 zum Turbinenrad 5.2 im Bereich des Innenumfanges des Arbeitsraumes 6.2 zum Zwecke des Druckaufbaus am Schaufelgrund des Turbinenrades 5.2 zum inneren Durchmesser des torusförmigen Arbeitsraumes.

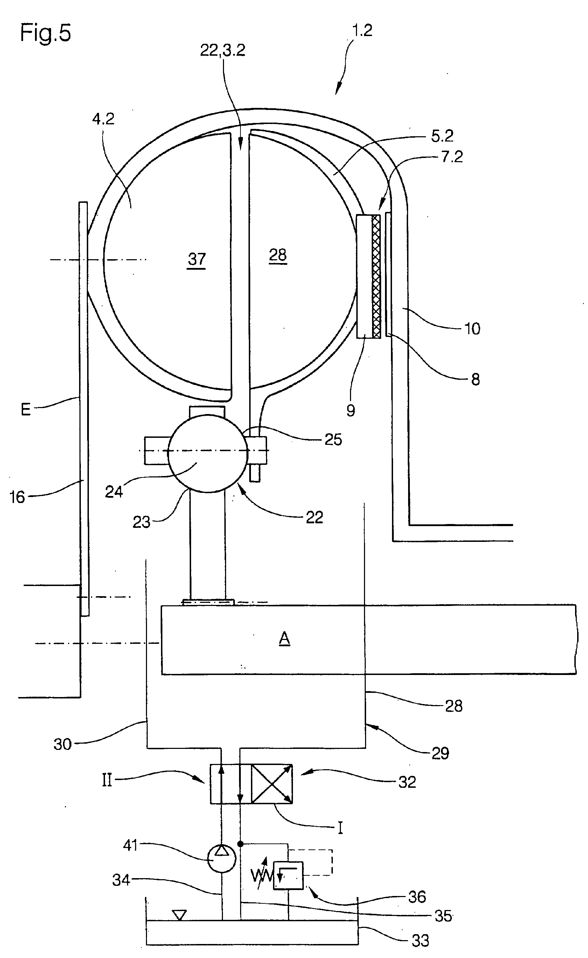

Die Figur 5 verdeutlicht in schematischer vereinfachter Darstellung eine bevorzugte Möglichkeit der Einstellung einer Teilfüllung der hydrodynamischen Kupplung 3.2 in einer Anfahreinheit 1.2, wie in den Figuren 1 bis 3 bereits beschrieben. Die Änderung des Füllungsgrades erfolgt durch Drucksteuerung. Die Führung des Betriebsmittels erfolgt außerhalb des torusförmigen Arbeitsraumes 6.2 zum Zwecke der Kühlung über einen offenen Kreislauf 29.

Die Änderung der Durchströmung der hydrodynamischen Kupplung 3.2, wie in den Figuren 3 und 4 dargestellt, erfolgt beispielsweise über eine Ventileinrichtung 32, die die Zuordnung der einzelnen Betriebsmittel-Strömungskanäle oder Leitungen zum Zulauf und Ablauf entsprechend der Schaltstellung festlegen. Im dargestellten Fall sind Zulauf und Ablauf jeweils mit 28 und 30 bezeichnet, wobei deren Ankoppelung an die Betriebsmittelführungskanäle und Räume beliebig erfolgen kann. In einer ersten Funktionsstellung I der Ventileinrichtung fungiert der mit 28 dargestellte Anschluß als Zulauf und der mit 30 dargestellte Anschluß als Rücklauf. Der mit 28 dargestellte Anschluß ist dabei mit im einzelnen nicht dargestellten Kanälen zur Führung des Betriebsmittels um den Außenumfang des Turbinenrades gekoppelt. In diesem Zustand dient der gekoppelte Betriebsmittelstrom bei Führung zwischen den einzelnen miteinander reibschlüssig in Verbindung zu bringenden Kupplungsscheiben 8 und 9 einer Deaktivierung der Überbrückungskopplung 7.2. Die hydrodynamische Kupplung wird in diesem Zustand zentripedal durchströmt. Dies bedeutet, eine Strömungsrichtung zur Mitte, in die Mitte des im torusförmigen Arbeitsraum sich einstellenden Arbeitskreislaufes 37. Der Anschluß 30 dient in diesem Fall dem Ablauf mit Betriebsmittel aus dem torusförmigen Arbeitsraum 6.2. In der zweiten, in Figur 5 dargestellten Funktionsstellung II der 4/2-Wegeventileinrichtung 32 fungiert der mit 28 bezeichnete Anschluß als Ablauf und der mit 30 bezeichnete Anschluß als Zulauf. In diesem Fall wird das Betriebsmittel zentrifugal aus Richtung der Rotationsachse in den torusförmigen Arbeitsraum eingeführt und bewirkt die in der Figur 4b dargestellte Funktion. Das Turbinenrad 5.2 der hydrodynamischen Kupplung 3.2 fungiert als Kolbenelement für die miteinander reibschlüssig in Verbindung bringbaren Kupplungsscheiben 8 und 9 der Überbrückungskupplung 7.2. Der offene Kreislauf 29 wird über einen Behälter 33 geführt. Mit diesem gekoppelt sind eine Speiseleitung 34 und eine Rückführleitung 35, welche über die Ventileinrichtung 32 wahlweise an die einzelnen Betriebsmittel-Führungskanäle oder -räume ankoppelbar sind. Die Speiseleitung 34 ist dem Anschluß 30 zugeordnet, die Rückführleitung 35 bildet den Anschluß 28. Zur Drucksteuerung ist in der Rückführleitung 35 ein steuerbares Druckbegrenzungsventil 36 vorgesehen, welches den Druck in der Rückführleitung 35 auf einen bestimmten Wert begrenzen kann. Zur Versorgung mit Betriebsmittel ist ds weiteren eine Fördereinrichtung 41 vorgesehen.

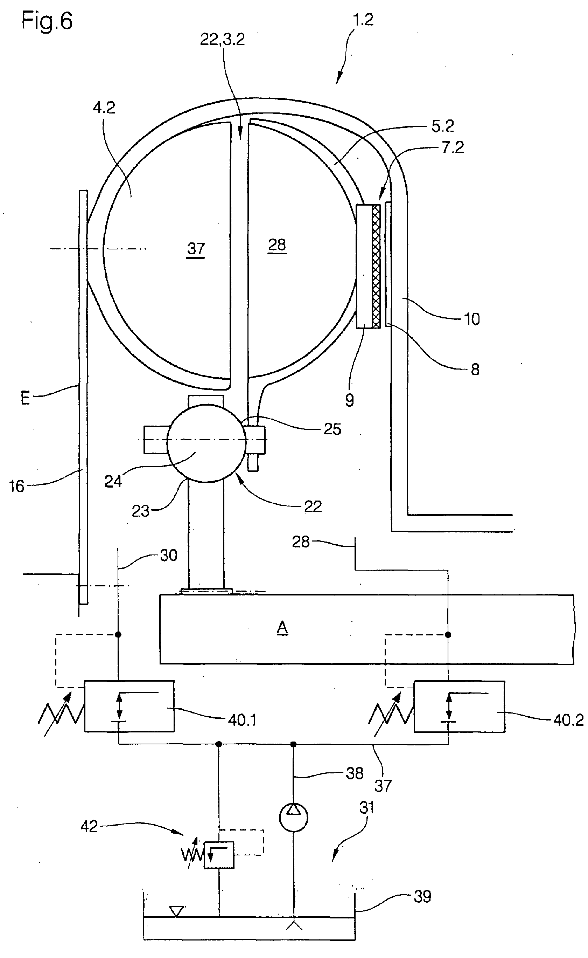

Eine andere Möglichkeit gemäß Figur 6 besteht darin, dem Zulauf zum torusförmigen Arbeitsraum 6.2 direkt und dem Ablauf vom torusförmigen Arbeitsraum 6.2 Mittel zur Steuerung des Druckes zuzuordnen. In diesem Fall sind der Zulauf und der Ablauf 30 bzw. 28 vom torusförmigen Arbeitsraum über eine Verbindungsleitung 37 miteinander gekoppelt, welche über eine weitere Verbindungsleitung 38 mit einem Betriebsmittelbehälter 39 gekoppelt ist. Die Steuerung des Füllungsgrades im torusförmigen Arbeitsraum 6.2 der hydrodynamischen Kupplung 3.2 kann dabei durch Änderung des Absolutdruckes p_{absolut} im torusförmigen Arbeitsraum 6.2 erfolgen. Zu diesem Zweck sind im einfachsten Fall die als Zu- und Ablauf fungierenden Anschlüsse 28 und 30 über die Verbindungsleitung 37 miteinander gekoppelt. Zusätzlich sind dabei den einzelnen Anschlüssen 28 und 30 jeweils steuerbare Ventileinrichtungen 40.1, 40.2 zur Steuerung der Drücke im Zulauf und Rücklauf - je nach Zuordnung der einzelnen Anschlüsse 28 und 30 als Zufuhr- oder Ablaufleitung - zugeordnet. Im einfachsten Fall sind diese, wie in dieser Figur dargestellt, als unabhängig voneinander steuerbare Druckregelventileinrichtungen ausgeführt. Die Verbindungsleitungen 37 und 38 sowie die Anschlüsse 28 und 30 und der Betriebsmittelbehälter 39 bilden ein Betriebsmittelversorgungssystem 31. Zur Vemeidung von Fördervorgängen gegen den Widerstand der Ventileinrichtungen 40.1 und 40.2 ist ein Druckentlastungsventil 42 vorgesehen.

### Bezugszeichenliste

- 1, 1.2, 1.3: Anfahreinheit
- 2, 2.2, 2.3: Anfahrelement
- 3, 3.2, 3.3: hydrodynamische Kupplung
- 4, 4.2, 4.3: Primärrad
- 5, 5.2, 5.3: Sekundärrad
- 6, 6.2, 6.3: Torusförmiger Arbeitsraum
- 7, 7.2, 73.: Überbrückungskupplung
- 8: Erste Kupplungsscheibe
- 9: Zweite Kupplungsscheibe
- 10: Pumpenradschale
- 11: Mittel zur Erzeugung einer Anpreßkraft zur Realisierung einer reibschlüssigen Verbindung - indirekt oder direkt - zwischen der ersten Kupplungsscheibe und der zweiten Kupplungsscheibe
- 12: Kolbenelement
- 13: Außenumfang
- 14: Druckkammer
- 15: Befestigungselemente
- 16: Flexplate
- 17: Schaufelgrund
- 18: Rückseite
- 19: Innerer Durchmesser
- 20: Äußerer Durchmesser
- 21: Reibfläche
- 22: Vorrichtung zur Dämpfung von Schwingungen
- 23: Sekundärteil
- 24: Mittel zur Dämpfungs- und Federkopplung
- 25: Primärteil
- 26: Kurbelwelle
- 27: Antriebsmaschine
- 28: Anschluß
- 29: offener Kreislauf
- 30: Anschluß
- 31: Betriebsmittelversorgungssystem
- 32: Ventileinrichtung
- 33: Behälter
- 34: Speiseleitung
- 35: Rückführleitung
- 36: Druckbegrenzungsventil
- 37: Verbindungsleitung
- 38: Verbindungsleitung
- 39: Betriebsmittelbehälter
- 40.1; 40.2: steuerbare Ventileinrichtungen
- 41: Pumpeinrichtung
- 42: Druckentlastungsventil
- E: Eingang
- A: Ausgang

## Patentansprüche

1. Anfahreinheit (1, 1.2, 1.3)
1.1 mit einem mit einem Antrieb koppelbaren Eingang (E) und einem mit dem Abtrieb koppelbaren Ausgang (A);
1.2 mit einem Anfahrelement (2, 2.2, 2.3) in Form einer hydrodynamischen Kupplung (3, 3.2, 3.3), umfassend ein Pumpenrad (4, 4.2, 4.3) und ein Turbinenrad (5, 5.2, 5.3), die miteinander einen torusförmigen Arbeitsraum (6, 6.2., 6.3) bilden und eine drehfest mit dem Pumpenrad (4, 4.2, 4.3) gekoppelte Pumpenradschale (10);
1.3 mit einer Überbrückungskupplung (7, 7.2, 7.3), umfassend wenigstens zwei miteinander direkt oder indirekt über weitere Übertragungsmittel reibschlüssig in Wirkverbindung bringbare Kupplungsscheiben - eine erste Kupplungsscheibe (8) und eine zweite Kupplungsscheibe (9);
**gekennzeichnet durch** die folgenden Merkmale:
1.4 die erste Kupplungsscheibe (8) ist drehfest mit der Pumpenradschale (10) und die zweite Kupplungsscheibe (9) ist drehfest mit dem Turbinenrad (5, 5.2, 5.3) verbunden;
1.5 mit Mitteln (11) zur Erzeugung einer Anpreßkraft zur Realisierung einer wenigstens mittelbaren reibschlüssigen Verbindung zwischen erster Kupplungsscheibe (8) und zweiter Kupplungsscheibe (9).

2. Anfahreinheit (1, 1.2, 1.3) nach Anspruch 1, **dadurch gekennzeichnet, daß** die Mittel (11) zur Realisierung einer wenigstens mittelbaren reibschlüssigen Verbindung zwischen erster Kupplungsscheibe (8) und zweiter Kupplungsscheibe (9) mindestens ein mit Druckmittel beaufschlagbares Kolbenelement (12) umfassen.

3. Anfahreinheit (1, 1.2, 1,3) nach Anspruch 2, **gekennzeichnet durch** die folgenden Merkmale:
3.1 das Turbinenrad (5, 5.2, 5.3) ist drehfest jedoch in axialer Richtung verschiebbar mit dem Ausgang (A) der Anfahreinheit (1, 1.2, 1.3) verbunden;
3.2 das Kolbenelement (12) wird vom Turbinenrad (5, 5.2, 5.3) gebildet;
3.3 eine mit Druckmittel befüllbare Kammer (14) zur Beaufschlagung des Kolbenelementes (12) wird vom torusförmigen Arbeitsraum (6, 6.2, 6.3) gebildet.

4. Anfahreinheit (1, 1.2, 1.3) nach Anspruch 1 oder 2, **gekennzeichnet durch** die folgenden Merkmale:
4.1 das Turbinenrad (5, 5.2, 5.3) ist drehfest mit dem Ausgang (A) verbunden, wobei die Kopplung drehsteif in Umfangsrichtung jedoch elastisch in axialer Richtung ausgeführt ist;
4.2 das Kolbenelement (12) wird vom Turbinenrad (5, 5.2, 5.3) gebildet;
4.3 eine mit Druckmittel befüllbare Kammer (14) zur Beaufschlagung des Kolbenelementes (12) wird vom torusförmigen Arbeitsraum (6, 6.2, 6.3) gebildet.

5. Anfahreinheit (1, 1.2, 1.3) nach einem der Ansprüche 3 oder 4, **dadurch gekennzeichnet, daß** eine Gegenkraft zum Kolbenelement (12) erzeugt wird, welche einen Abstand zwischen den miteinander reibschlüssig zu verbindenen Kupplungsscheiben - erste Kupplungsscheibe (8) und zweite Kupplungsscheibe (9) - während des Betriebes der hydrodynamischen Kupplung (3, 3.2, 3.3) ermöglicht.

6. Anfahreinheit (1, 1.2, 1.3) nach Anspruch 5, **gekennzeichnet durch** die folgenden Merkmale:
6.1 mit Mitteln zur Führung des Betriebsmittels zur hydrodynamischen Kupplung (3, 3.2, 3.3) entlang des Außenumfanges (13) des Sekundärrades (5, 5.2, 5.3);
6.2 die Gegenkraft zur Beabstandung der einzelnen Kupplungsscheiben (8, 9) der Überbrückungskupplung (7, 7.2, 7.3) wird vom Betriebsmittel gebildet.

7. Anfahreinheit (1, 1.2, 1.3) nach einem der Ansprüche 1 bis 6, **dadurch gekennzeichnet, daß** die Mittel (11) zur Erzeugung der Anpreßkraft Mittel zur Änderung der Betriebsmittelführung, insbesondere zur Zufuhr zum Innenumfang des torusförmigen Arbeitsraumes (6) außerhalb des Außenumfanges (21) des Turbinenrades (5.2) umfassen.

8. Anfahreinheit (1, 1.2, 1.3) nach einem der Ansprüche 1 bis 7, **gekennzeichnet durch** die folgenden Merkmale:
8.1 die erste Kupplungsscheibe (8) und/oder die zweite Kupplungsscheibe (9) sind einteilig mit der Pumpenradschale (10) und/oder dem Turbinenrad (5, 5.2, 5.3) ausgeführt;
8.2 die Pumpenradschale (10) und/oder das Turbinenrad (5, 5.2, 5,3) sind mit einem Reibbelag beschichtet.

9. Anfahreinheit (1, 1.2, 1,3) nach einem der Ansprüche 1 bis 8, **gekennzeichnet durch** die folgenden Merkmale:
9.1 die erste Kupplungsscheibe (8) und/oder die zweite Kupplungsscheibe (9) sind als separates Bauelement ausgeführt, welche drehfest mit der Pumpenradschale (10) und/oder dem Turbinenrad (5, 5.2, 5.3) verbunden sind;
9.2 die Reibfläche wird vom separaten Bauelement oder einem auf diesem aufgetragenen Reibbelag gebildet.

10. Anfahreinheit (1, 1.2, 1.3) nach einem der Ansprüche 1 bis 9, **dadurch gekennzeichnet, daß** die zweite Kupplungsscheibe (9) an der Rückseite (18) des Turbinenrades (5, 5.2, 5.3) angeordnet ist.

11. Anfahreinheit (1, 1.2, 1.3) nach Anspruch 10, **dadurch gekennzeichnet, daß** die zweite Kupplungsscheibe (9) in radialer Richtung in einem Bereich zwischen dem äußeren Durchmesser (20) und dem inneren Durchmesser (19) des torusförmigen Arbeitsraumes (6, 6.2, 6.3) angeordnet ist.

12. Anfahreinheit (1, 1.2, 1.3) nach einem der Ansprüche 1 bis 11, **dadurch gekennzeichnet, daß** die erste Kupplungsscheibe (8) und die zweite Kupplungsscheibe (9) parallel zur Trennebene zwischen dem Pumpenrad (4, 4.2, 4.3) und dem Turbinenrad (5, 5.2, 5.3) ausgerichtet ist.

13. Anfahreinheit (1, 1.2, 1.3) **gekennzeichnet durch** die folgenden Merkmale:
13.1 mit einer Vorrichtung zur Dämpfung von Schwingungen (22), insbesondere einem Torsionsschwingungsdämpfer;
13.2 die Vorrichtung zur Dämpfung von Schwingungen (22) ist in Reihe mit der hydrodynamischen Kupplung (3, 3.2, 3.3) und der Überbrückungskupplung (7, 7.2, 7.3) geschaltet.

14. Anfahreinheit (1, 1.2, 1.3) nach Anspruch 13, **dadurch gekennzeichnet, daß** die Vorrichtung zur Dämpfung von Schwingungen (22) zwischen dem Turbinenrad (5, 5.2, 5.3) und dem Ausgang (A) angeordnet ist.

15. Anfahreinheit (1, 1.2, 1.3) nach einem der Ansprüche 13 oder 14, **dadurch gekennzeichnet, daß** die Vorrichtung zur Dämpfung von Schwingungen (22) als Reibdämpfungseinrichtung ausgeführt ist.

16. Anfahreinheit (1, 1.2, 1.3) nach einem der Ansprüche 13 oder 14, **dadurch gekennzeichnet, daß** die Vorrichtung zur Dämpfung von Schwingungen (22) als hydraulische Dämpfungseinrichtung ausgeführt ist.

17. Anfahreinheit (1, 1.2, 1.3) nach Anspruch 16, **gekennzeichnet durch** die folgenden Merkmale:
17.1 die Vorrichtung zur Dämpfung von Schwingungen (22) umfaßt ein Primärteil (25) und eine Sekundärteil (23), welche in Umfangsrichtung drehfest miteinander gekoppelt jedoch begrenzt gegeneinander verdrehbar sind;
17.2 zwischen dem Primärteil (25) und dem Sekundärteil (23) sind Mittel zur Dämpfungs- und/oder Federkopplung (24) angeordnet.

18. Anfahreinheit (1, 1.2, 1.3) nach einem der Ansprüche 1 bis 17, **dadurch gekennzeichnet, daß** das Turbinenrad (5, 5.2, 5.3) räumlich zwischen dem Eingang (E) und dem Pumpenrad (4, 4.2, 4.3) angeordnet ist.

19. Anfahreinheit (1, 1.2, 1.3) nach einem der Ansprüche 1 bis 17, **dadurch gekennzeichnet, daß** das Turbinenrad (5, 5.2, 5.3) räumlich hinter dem Pumpenrad (4, 4.2, 4.3) und das Pumpenrad (4, 4.2, 4.3) zwischen dem Eingang (E) und dem Turbinenrad (5, 5.2, 5.3) angeordnet ist.

20. Anfahreinheit (1; 1.2; 1.3) nach einem der Ansprüche 1 bis 19, **dadurch gekennzeichnet, daß** die hydrodynamische Kupplung (3; 3.2; 3.3) steuer- und regelbar ist.

21. Anfahreinheit (1; 1.2; 1.3) nach Anspruch 20, **dadurch gekennzeichnet, daß** die hydrodynamische Kupplung (3; 3.2; 3.3) mit Drucksteuerung betreibbar ist.

22. Getriebebaueinheit mit einer Anfahreinheit (1, 1.2, 1.3) gemäß einem der Ansprüche 1 bis 21.

23. Getriebebaueinheit nach Anspruch 22, **dadurch gekennzeichnet, daß** der Ausgang (A) der Anfahreinheit (1, 1.2, 1.3) mit mindestens einer Nachschaltstufe gekoppelt ist.

24. Getriebebaueinheit nach einem der Ansprüche 22 oder 23, **dadurch gekennzeichnet, daß** der Ausgang der Anfahreinheit mit einem stufenlosen Getriebe gekoppelt ist.

25. Getriebebaueinheit nach einem der Ansprüche 22 oder 24, **dadurch gekennzeichnet, daß** diese als Automatgetriebe ausgeführt ist.

26. Antriebssystem
26.1 mit einer Antriebsmaschine;
26.2 mit einer mit der Antriebsmaschine wenigstens mittelbar gekoppelten Anfahreinheit (1, 1.2, 1.3) gemäß einem der Ansprüche 1 bis 19.

27. Antriebssystem mit einer Getriebebaueinheit gemäß einem der Ansprüche 22 bis 25.

28. Antriebssystem nach einem der Ansprüche 26 oder 27 zum Einsatz in einem Fahrzeug.

29. Antriebssystem nach einem der Ansprüche 26 oder 27 zum Einsatz in einer stationären Anlage.
